# EUROPÄISCHE PATENTSCHRIFT

(11) **EP 0 472 672 B1**
(45) Veröffentlichungstag und Bekanntmachung des Hinweises auf die Patenterteilung: **03.04.1996**
(21) Anmeldenummer: 91902662.5
(22) Anmeldetag: 29.01.1991
(51) Int. Cl.: B23B 31/12

(54) **HANDWERKZEUGMASCHINE MIT BOHRFUTTER**
HAND TOOL WITH DRILL CHUCK
OUTIL A MAIN A MANDRIN DE SERRAGE

(30) Priorität: 23.02.1990 DE 4005757
(43) Veröffentlichungstag der Anmeldung: 04.03.1992
(73) Patentinhaber: ROBERT BOSCH GMBH, D-70442 Stuttgart (DE)
(72) Erfinder: REIBETANZ, Wilbert, D-7022 Leinfelden-Echterdingen (DE); WANNER, Karl, D-7022 Leinfelden-Echterdingen (DE); BAUMANN, Otto, D-7022 Leinfelden-Echterdingen (DE); MÜLLER, Rolf, D-7022 Leinfelden-Echterdingen (DE)
(86) Internationale Anmeldenummer: DE9100080
(87) Internationale Veröffentlichungsnummer: WO9112914

(56) Entgegenhaltungen:
- EP-A- 0 017 748
- EP-A- 0 300 375
- DE-A- 3 500 201
- DE-A- 3 617 105
- DE-C- 3 516 451

## Beschreibung

### Stand der Technik

Die Erfindung geht aus von einer Handwerkzeugmaschine mit Bohrfutter nach der Gattung des Anspruchs 1. Aus der DE-C 35 16 451 ist bereits eine für Handwerkzeugmaschinen geeignete Schlagbohreinrichtung mit Bohrfutter bekannt, deren Stellring für die Futterbacken während des Betriebs mittels einer Hülse gegen Verdrehen gesichert ist. Zum Verstellen der Futterbacken muß die Hülse zurückgezogen und arretiert werden. Vergißt die Bedienungsperson vor der Inbetriebnahme der Maschine die Arretierung zu lösen, so wird die Verdrehsicherung nicht wirksam, die Futterbacken können Zurückweichen und das Werkzeug löst sich während des Schlagbohrens.

### Vorteile der Erfindung

Die erfindungsgemäße Handwerkzeugmaschine mit den Merkmalen des Anspruchs 1 hat demgegenüber den Vorteil, daß sich das Werkzeug nach dem Spannen während des Betriebs nicht mehr lösen kann. Dies wird dadurch erreicht, daß die Sicherungshülse gegen das Verdrehen des Stellrings während des Schlagbohrbetriebs automatisch in ihre Verriegelungsstellung überführt wird. Die Verriegelung ist besonders bei schlüssellosen Bohrfuttern, deren innere Reibung durch Wälzlager verringert ist, wichtig.

Durch die in den Ansprüchen 2ff angeführten Maßnahmen ist eine vorteilhafte Weiterbildung und Verbesserung des im Anspruch 1 angegebenen Bohrfutters möglich. Besonders Vorteilhaft ist eine gemäß Anspruch 2 angeordnete Gleitfläche, auf der ein Gleitglied während des Spannens, also bei Stillstand der Maschine, haftet aber bei den durch den Betrieb hervorgerufenen Erschütterungen abgleitet. Ein sicheres Überführen der Sicherungshülse in die Verriegelungsstellung bewirkt die Ausbildung der Gleitfläche gemäß Anspruch 3. Die Anordnung einer Rastausnehmung in unmittelbarem Anschluß an die Gleitfläche gemäß Anspruch 4 stellt ein sicheres Einrasten der Sicherungshülse in der Verriegelungsstellung sicher. Eine schräge Führungsfläche zwischen Gleitfläche und Rastausnehmung gemäß Anspruch 5 ermöglicht ein leichtgängiges Entriegeln der Sicherungshülse. Die Gleitfläche kann entweder an der Sicherungshülse oder aber an einem mit dem Grundkörper verbundenen Haltemittel, insbesondere drehbarem Ring angeordnet sein. Das Gleitglied ist jeweils an dem anderen Teil also an dem Haltemittel oder an der Sicherungshülse befestigt. Die Ausbildung des Haltemittels als drehbarer Ring gemäß Anspruch 7 stellt eine besonders einfache und leicht bedienbare Verkörperung dar. Die Anordnung von zwei Gleitflächen jeweils beidseits der Rastausnehmung gemäß Anspruch 8 eröffnet die Möglichkeit, den Ring beim Einstellen in beliebige Richtung drehen zu können oder gemäß Anspruch 9 eine der Gleitflächen mit einer Arretiernase zu versehen, so daß die Sicherungshülse in dieser Stellung nicht in die Verriegelungsstellung einrastet. Dies ist beim Drehbohren nützlich, bei dem ein nachträgliches Lösen des Werkzeugs nicht zu erwarten ist. Die Anordnung einer Gleitfläche ohne Arretiernase gemäß Anspruch 10 in der Drehrichtung von der Rastausnehmung, in der die Spannhülse zum Schließen des Bohrfutters gedreht wird, ermöglicht ein gleichzeitiges Ergreifen sowohl der Spannhülse als auch des Rings, so daß der Ring bis zu seinem Anschlag mitgedreht werden kann. Damit ist auf sehr bedienungsfreundliche Weise sichergestellt, daß im Normalfall die Sicherungshülse während des Betriebs automatisch in ihre Verriegelungsstellung rückt. Die Wahl von Sägezähnen als Kupplungsmittel gemäß Anspruch 11 stellt sicher, daß die Futterbacken sich bei versetzt stehenden Kupplungszähnen nicht öffnen sondern höchstens weiter schließen können. Eine Tellerfeder gemäß Anspruch 12, die zwischen Stellring und Grundkörper bzw. Axiallager angeordnet ist, hält eine Mindestspannkraft selbst dann aufrecht, wenn als Kupplungsmittel nicht Sägezähne sondern dachförmige Zähne verwendet werden. Die Anordnung eines Wälzlagers zur Verminderung der axialen Reibungskräfte beim Spannen des Bohrfutters gemäß Anspruch 13 ermöglicht ein sicheres Spannen von Hand ohne Werkzeug.

### Zeichnung

Zwei Ausführungsbeispiele der Erfindung sind in der Zeichnung dargestellt und in der nachfolgenden Beschreibung näher erläutert. Figur 1 zeigt einen Teillängsschnitt durch Spindel und Bohrfutter einer Handwerkzeugmaschine, Figur 2 zeigt in einem zweiten Ausführungsbeispiel Mittel zum Einrücken der Sicherungshülse und Figur 3 zeigt schematisch die Kupplungsmittel einer Sicherungshülse.

### Beschreibung der Ausführungsbeispiele

Von einer vorzugsweise elektrisch betriebenen Handwerkzeugmaschine ist eine drehend angetriebene Spindel 1 gezeigt, auf die ein schlüsselloses Bohrfutter 2 aufgeschraubt ist. Das Bohrfutter 2 besteht aus einem Grundkörper 3 in dem ein Gewindeloch 4 für die Spindel 1 angeordnet ist. Schräg zur Achse des Grundkörpers 3 sind darin vorzugsweise drei Führungen 5 zur Aufnahme von Futterbacken 6 angebracht. Um den Grundkörper drehbar angeordnet ist ein Stellring 8 mit einem konischen Innengewinde 9, das mit Zähnen an den Futterbacken 6 in bekannter Weise in Verbindung steht. Der Stellring 8 ist axial über ein Wälzlager 10 gegen den Grundkörper 3 abgestützt. Zwischen das Lager 10 und den Stellring 8 ist eine Tellerfeder 11 eingesetzt. Mit dem Stellring 8 drehfest verbunden ist eine Spannhülse 13, die teilweise von einer handhabungsfreundlichen Ummantelung 14 aus Kunststoff umgeben ist. Die Ummantelung 14 weist vorzugsweise Längsriffelung auf. Die Spannhülse 13 trägt an ihrer Stirnseite als Kupplungsmittel 15 eine Schrägverzahnung in Form von Sägezähnen oder Spitzzähnen.

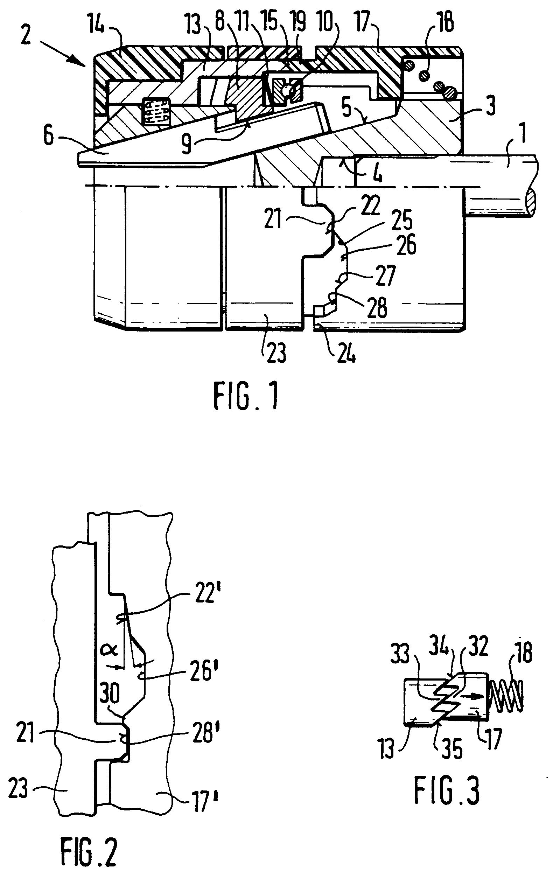

Auf dem Grundkörper 3 ist außerdem axial verschieblich eine Sicherungshülse 17 angeordnet. Zwischen Grundkörper 3 und Sicherungshülse 17 ist eine Druckfeder 18 eingesetzt, die die Sicherungshülse 17 in Richtung auf die Spannhülse 13 drängt. An ihrer der Spannhülse 13 zugewandten Stirnseite trägt die Sicherungshülse als Kupplungsmittel ebenfalls eine Schrägverzahnung 19 in Form von Sägezähnen oder Spitzzähnen. Die Sicherungshülse 17 ist in Figur 1 in ihrer nicht verriegelten Stellung gezeigt, in der die Verzahnungen 15 und 19 nicht ineinandergreifen. Zum Einrücken der Sicherungshülse 17 in ihre Verriegelungsstellung sind Mittel 21, 22 an der Sicherungshülse 17 und an einem als Haltemittel dienenden Ring 23 angeordnet. Der Ring 23 ist begrenzt drehbar auf der Spannhülse 13 gelagert und weist ein nockenartiges Gleitglied 21 auf. Das Gleitglied 21 weist in Richtung auf die Sicherungshülse 17 und liegt in der nicht verriegelten Stellung an einer Gleitfläche 22 der Sicherungshülse 17 an. Die Gleitfläche 22 ist nahezu parallel zu einer radial zur Achse der Sicherungshülse 17 angeordneten Fläche ausgerichtet. Sie ist gegenüber dem Rand 24 der Sicherungshülse 17 in axialer Richtung vertieft. An die Gleitfläche 22 schließt sich eine schräge Führungsfläche 25 an, die in eine Rastausnehmung 26 führt. Die Rastausnehmung 26 ist soweit in die Sicherungshülse 17 eingeschnitten, daß das Gleitglied 21 darin vollständig aufgenommen wird, wenn der Ring 23 an dem Rand 24 anliegt. Jenseits der Rastausnehmung 26 ist eine weitere Führungsfläche 27 mit anschließender Gleitfläche 28 angeordnet.

Im zweiten Ausführungsbeispiel nach Figur 2 sind die Mittel zum Einrücken der Sicherungshülse ausschnittweise gezeigt. Der Ring 23 mit Gleitglied 21 entspricht dem ersten Ausführungsbeispiel. Der Sicherungshülse 17' weist zwei Gleitflächen 22' und 28' auf, wobei die Gleitfläche 22' um einem Winkel α gegenüber einer radial verlaufenden Fläche geneigt ist.

Der Winkel α liegt zwischen 0^{o} und der Größe des Reibwinkels zwischen den Materialien der Gleitfläche 22' und dem Gleitglied 21. Die zweite Gleitfläche 28' ist parallel zu einer Radialfläche der Sicherungshülse 17' angeordnet und weist an ihrer der Einkerbung 26' zugewandten Seite eine Arretiernase 30 auf.

In Figur 3 sind schematisch die Kupplungsmittel 15 und 19 an der Spannhülse 13 und der Sicherungshülse 17 gezeigt. Die Kupplungsmittel bestehen aus zueinander korrespondierend angeordneten Sägezähnen 32 und 33. Deren Schrägflächen 34, 35 sind so angeordnet, daß sie in Schließrichtung des Bohrfutters wirken. Zum Spannen eines Werkzeugs wird zunächst der Ring 23 soweit verdreht, bis das Gleitglied 21 auf einer der Gleitflächen 22, 28 zu liegen kommt. In diesem Zustand ist die Sicherungshülse entriegelt. Nun kann ohne Kontakt der Kupplungsmittel 15, 19 die Spannhülse 13 auf- bzw. zugedreht werden. Bei eingelegten Werkzeug wird die Spannhülse 13 von Hand an der Ummantelung 14 umgriffen und, üblicherweise im Uhrzeigersinn, zugedreht. Das Axiallager 10 vermindert die innere Reibung in dem Bohrfutter 1 soweit, daß die von Hand aufbringbare Spannkraft ausreicht, um ein Bohrwerkzeug sicher zu spannen. Weitere Handgriffe zur Verriegelung des Futters sind nicht mehr notwendig.

Im Betrieb des Bohrfutters mit einer Schlagbohrmaschine treten sofort bei Inbetriebnahme starke Erschütterung am Bohrfutter auf, die das Gleitglied 21 entlang der Gleitfläche 22 in die Rastausnehmung 26 gleiten lassen. Dabei dreht sich das Gleitglied 21 zusammen mit dem Ring 23 gegenüber der radial feststehenden Sicherungshülse. Dies führt zu einer Azialverschiebung der Sicherungshülse 17 und zum Eingreifen der Kupplungsmittel 15, 19 ineinander. Falls die Sägezähne 32, 33 dabei nicht vollständig zum Eingriff kommen, wirken die Schrägflächen 34, 35 in dem Sinne, daß die Futterbacken 6 nachgespannt werden.

Falls eine Verriegelung der Sicherungshülse 17 zum Beispiel beim reinen Drehbohren nicht erforderlich ist, kann eine oder beide der Gleitflächen 22', 28' mit Arretiernasen 30 versehen sein, so daß die Sicherungshülse 17 beim Spannen sowie im Betrieb sich nicht automatisch verriegelt.

## Patentansprüche

1. Handwerkzeugmaschine mit Bohrfutter (2), das einen Grundkörper (3) und mehrere Futterbacken (6) aufweist, die mittels eines drehbaren Stellrings (8) auf verschiedene Durchmesser von in das Futter (2) einzusetzenden Werkzeugschäften einstellbar sind, wobei der Stellring (8) gegenüber dem Grundkörper (3) mittels einer axial verschieblichen, Kupplungsmittel (19) aufweisenden und unter Federkraft stehenden Sicherungshülse (17) undrehbar festlegbar ist, die durch Verschieben entgegen Federkraft in eine den Stellring (8) nicht verriegelnde Stellung bringbar ist, in der die Sicherungshülse (17) bei Stillstand der Handwerkzeugmaschine gehalten wird, gekennzeichnet durch selbsttätig wirkende Mittel (21, 22) zum Einrücken der Sicherungshülse (17) aus ihrer nicht verriegelnden Stellung in ihre Verriegelungsstellung bei durch den Betrieb der Handwerkzeugmaschine hervorgerufenen Erschütterungen.

2. Handwerkzeugmaschine nach Anspruch 1, dadurch gekennzeichnet, daß die Mittel (21, 22) ein Gleitglied (21) und eine Gleitfläche (22, 28) umfassen, die bei einer Relativbewegung zueinander aneinander abgleiten, wobei die Gleitfläche (22) parallel oder leicht geneigt zu einer radial zur Achse der Sicherungshülse (17) angeordneten Fläche verläuft.

3. Handwerkzeugmaschine nach Anspruch 2, dadurch gekennzeichnet, daß die Neigung der Gleitfläche (22, 28) nicht größer ist als der Reibwinkel zwischen der Gleitfläche (22, 28) und dem Gleitglied (21).

4. Handwerkzeugmaschine nach einem der Ansprüche 2 oder 3, dadurch gekennzeichnet, daß sich an die Gleitfläche (22, 28) eine Rastausnehmung (26) zur Aufnahme des Gleitgliedes (21) anschließt.

5. Handwerkzeugmaschine nach Anspruch 4, dadurch gekennzeichnet, daß zwischen der Gleitfläche (22, 28) und der Rastausnehmung (26) eine schräge Führungsfläche (25, 27) angeordnet ist.

6. Handwerkzeugmaschine nach einem der Ansprüche 2 bis 5, dadurch gekennzeichnet, daß jeweils eines der Mittel Gleitglied (21) bzw. Gleitfläche (22, 28) an der Sicherungshülse (17) und das andere an einem axial fest mit dem Grundkörper (3) verbundenen Haltemittel (23) angeordnet ist.

7. Handwerkzeugmaschine nach Anspruch 6, dadurch gekennzeichnet, daß das Haltemittel ein gegenüber dem Grundkörper verdrehbarer Ring (23) ist und die Sicherungshülse (17) bei Relativverdrehung gegenüber dem Ring (23) von ihrer nicht verriegelnden Stellung in ihre Verriegelungsstellung überführbar ist.

8. Handwerkzeugmaschine nach einem der Ansprüche 4 bis 7, dadurch gekennzeichnet, daß beidseits der Rastausnehmung (26) jeweils eine Gleitfläche (22, 28) angeordnet ist.

9. Handwerkzeugmaschine nach einem der Ansprüche 4 bis 8, dadurch gekennzeichnet, daß mindestens eine der Gleitflächen (28') an ihrer der Rastausnehmung (26') zugewandten Seite eine Arretiernase (30) aufweist.

10. Handwerkzeugmaschine nach Anspruch 9, dadurch gekennzeichnet, daß eine Gleitfläche (22) ohne Arretiernase (30) in der Drehrichtung von der Rastausnehmung (26) angeordnet ist, in der eine Spannhülse (10) zum Schließen des Bohrfutters (2) gedreht wird.

11. Handwerkzeugmaschine nach einem der vorhergehenden Ansprüche, dadurch gekennzeichnet, daß die Kupplungsmittel (19) als Sägezähne (32) mit Schrägflächen (34) in Schließrichtung ausgebildet sind.

12. Handwerkzeugmaschine nach einem der vorhergehenden Ansprüche, dadurch gekennzeichnet, daß der Stellring (8) mittels einer Feder, insbesondere Tellerfeder (11) gegen den Grundkörper (3) gehalten ist.

13. Handwerkzeugmaschine nach einem der vorhergehenden Ansprüche, dadurch gekennzeichnet, daß der Stellring (8) über ein Wälzlager (10) axial gegen den Grundkörper (3) abgestützt ist.

## Claims

1. Powered hand tool having a drill chuck (2) which has a basic body (3) and a plurality of chuck jaws (6) which can be adjusted by means of a rotatable adjusting ring (8) to various diameters of tool shanks to be inserted into the chuck (2), in which arrangement the adjusting ring (8) can be secured in a non-rotatable manner relative to the basic body (3) by means of an axially displaceable locking sleeve (17) which has coupling means (19), is under spring force and, by displacement against spring force, can be put into a position which does not lock the adjusting ring (8) and in which the locking sleeve (17) is held when the powered hand tool is stopped, characterized by automatically acting means (21, 22) for shifting the locking sleeve (17) from its non-locking position into its locking position during vibrations caused by the operation of the powered hand tool.

2. Powered hand tool according to Claim 1, characterized in that the means (21, 22) comprise a sliding member (21) and a sliding surface (22, 28) which slide on one another during a movement relative to one another, the sliding surface (22) running parallel to or slightly inclined to a surface arranged radially to the axis of the locking sleeve (17).

3. Powered hand tool according to Claim 2, characterized in that the inclination of the sliding surface (22, 28) is not greater than the friction angle between the sliding surface (22, 28) and the sliding member (21).

4. Powered hand tool according to either of Claims 2 or 3, characterized in that a catch recess (26) for accommodating the sliding member (21) adjoins the sliding surface (22, 28).

5. Powered hand tool according to Claim 4, characterized in that a sloping guide surface (25, 27) is arranged between the sliding surface (22, 28) and the catch recess (26).

6. Powered hand tool according to one of Claims 2 to 5, characterized in that in each case one of the means, sliding member (21) or sliding surface (22, 28), is arranged on the locking sleeve (17) and the other is arranged on a holding means (23) connected in an axially fixed manner to the basic body (3).

7. Powered hand tool according to Claim 6, characterized in that the holding means is a ring (23) rotatable relative to the basic body, and the locking sleeve (17), upon rotation relative to the ring (23), can be shifted from its non-locking position into its locking position.

8. Powered hand tool according to one of Claims 4 to 7, characterized in that in each case a sliding surface (22, 28) is arranged on either side of the catch recess (26).

9. Powered hand tool according to one of Claims 4 to 8, characterized in that at least one of the sliding surfaces (28') has an arresting lug (30) on its side facing the catch recess (26').

10. Powered hand tool according to Claim 9, characterized in that one sliding surface (22) without an arresting lug (30) is arranged in the direction of rotation of the catch recess (26) in which a clamping sleeve (13) is rotated for closing the drill chuck (2).

11. Powered hand tool according to one of the preceding claims, characterized in that the coupling means (19) are designed as saw teeth (32) having oblique surfaces (34) in the closing direction.

12. Powered hand tool according to one of the preceding claims, characterized in that the adjusting ring (8) is held against the basic body (3) by means of a spring, in particular a disc spring (11).

13. Powered hand tool according to one of the preceding claims, characterized in that the adjusting ring (8) is axially supported against the basic body (3) via a rolling bearing (10).

## Revendications

1. Machine-outil à main équipée d'un mandrin (2) comprenant un corps de base (3) et plusieurs mors (6) réglables à l'aide d'une bague de réglage (8), rotative, en fonction des différents diamètres des tiges d'outils placées dans le mandrin (2), la bague de réglage (8) étant susceptible d'être bloquée en rotation par rapport au corps de base (3) par l'intermédiaire d'un manchon de fixation (17), coulissant axialement, ayant des moyens d'accouplement (19) et soumis à une force de ressort, ce manchon pouvant être mis par coulissement contre la force de ressort dans une position de non verrouillage de la bague de réglage (8), position dans laquelle le manchon de fixation (17) est tenu à l'arrêt de la machine-outil, caractérisée par des moyens à effet automatique (21, 22) pour faire passer le manchon de fixation (17) de sa position de non verrouillage dans sa position de verrouillage, par les secousses provoquées par le fonctionnement de la machine-outil à main.

2. Machine-outil à main selon la revendication 1, caractérisée en ce que les moyens (21, 22) comprennent un organe de glissement (21) et une surface de glissement (22, 28) glissant relativement l'un par rapport à l'autre à l'occasion d'un mouvement relatif, la surface de glissement (22) étant parallèle ou légèrement inclinée par rapport à une surface radiale par rapport à l'axe du manchon de fixation (17).

3. Machine-outil à main selon la revendication 2, caractérisée en ce que l'inclinaison de la surface de glissement (22, 28) n'est pas supérieure à l'angle de frottement entre la surface de glissement (22, 28) et l'organe de glissement (21).

4. Machine-outil selon l'une des revendications 2 ou 3, caractérisée en ce que la surface de glissement (22, 28) se poursuit par une cavité d'encliquetage (26) pour recevoir l'organe de glissement (21).

5. Machine-outil à main selon la revendication 4, caractérisée par une surface de guidage inclinée (25, 27) entre la surface de glissement (22, 28) et la cavité d'encliquetage (26).

6. Machine-outil à main selon l'une des revendications 2 à 5, caractérisée en ce que l'un des moyens (organe de glissement (21) ou surface de glissement (22, 28)), est prévu sur le manchon de fixation (17) et l'autre moyen est prévu sur un moyen de retenue (23) relié solidairement dans la direction axiale au corps de base (3).

7. Machine-outil à main selon la revendication 6, caractérisée en ce que le moyen de retenue est une bague (23) qui peut tourner par rapport au corps de base et le manchon de fixation (17) peut passer dans sa position de verrouillage par un mouvement de rotation relative par rapport à la bague (23) en partant de sa position de non verrouillage.

8. Machine-outil à main selon l'une des revendications 4 à 7, caractérisée par une surface de glissement (22, 28) respective de chaque coté de la cavité d'encliquetage (26).

9. Machine-outil à main selon l'une des revendications 4 à 8, caractérisée en ce qu'au moins l'une des surfaces de glissement (28') comporte un bec de blocage (30) sur son côté tourné vers la cavité d'encliquetage (26').

10. Machine-outil à main selon la revendication 9, caractérisée par une surface de glissement (22) sans bec de blocage (30) dans le sens de rotation en avant de la cavité d'encliquetage (26), dans laquelle tourne un manchon de serrage (10) pour fermer le mandrin (2).

11. Machine-outil à main selon l'une des revendications précédentes, caractérisée en ce que le moyen d'accouplement (19) est constitué par des dents de scie (32) dont les rampes (34) correspondent à la direction de fermeture.

12. Machine-outil à main selon l'une des revendications précédentes, caractérisée en ce que la bague de réglage (8) est maintenue par un ressort, notamment un ressort Belleville (11) contre le corps de base (3).

13. Machine-outil à main selon l'une des revendications précédentes, caractérisée en ce que la bague de réglage (8) s'appuie axialement contre le corps de base (3) par l'intermédiaire d'un palier à roulement (10).
